# EUROPÄISCHE PATENTSCHRIFT

(11) **EP 1 882 732 B1**
(45) Veröffentlichungstag und Bekanntmachung des Hinweises auf die Patenterteilung: **05.05.2010**
(21) Anmeldenummer: 06117994.1
(22) Anmeldetag: 27.07.2006
(51) Int. Cl.: C11D 3/39, C11D 17/00, C11D 3/04, C11D 3/10, C01B 15/10

(54) **Umhüllte Natriumpercarbonatpartikel**
Coated particles of sodium percarbonate
Particules de percarbonate de sodium enrobées

(43) Veröffentlichungstag der Anmeldung: 30.01.2008
(73) Patentinhaber: Evonik Degussa GmbH, 45128 Essen (DE)
(72) Erfinder: Leininger, Stefan, 63505 Langenselbold (DE); Jakob, Harald, 63594 Hasselroth (DE); Kottke, Ulrike, 63571 Gelnhausen (DE)

(56) Entgegenhaltungen:
- EP-A- 0 651 053
- EP-A- 1 149 800
- WO-A-97/19890
- GB-A- 1 538 893
- US-A- 4 329 244

## Beschreibung

Gegenstand der Erfindung sind umhüllte Natriumpercarbonatpartikel, die als Bestandteil eines Waschmittels eine verbesserte Waschkraft des Waschmittels bewirken.

Natriumpercarbonat wird zunehmend als bleichwirksamer Bestandteil in Waschmitteln und Reinigungsmitteln eingesetzt. Natriumpercarbonat muss für diese Anwendung eine ausreichende Lagerbeständigkeit in Waschmittel- und Reinigungsmittelzubereitungen aufweisen, da es sonst bei der Lagerung der Waschmittel und Reinigungsmittel zu einem unerwünschten Verlust an Aktivsauerstoff und damit an Bleichwirkung kommt. Natriumpercarbonat ist feuchtigkeitsempfindlich und zersetzt sich in Waschmittel- und Reinigungsmittelzubereitungen bei Einwirkung von Feuchtigkeit unter Verlust von Aktivsauerstoff. Deshalb wird Natriumpercarbonat zur Herstellung von Waschmitteln oder Reinigungsmitteln üblicherweise in umhüllter Form eingesetzt, wobei die Hüllschicht die Einwirkung von Feuchtigkeit auf die umhüllten Natriumpercarbonatpartikel verhindert. Geeignete Hüllschichten aus anorganischen hydratbildenden Salzen, wie zum Beispiel Natriumcarbonat, Natriumsulfat oder Magnesiumsulfat und Mischungen solcher Salze sind beispielsweise aus DE 24 17 572, EP-A 0 863 842 und US 4,325,933 bekannt.

Natriumpercarbonatpartikel enthaltende Waschmittel sollen nicht nur eine hohe Lagerstabilität besitzen, sondern zusätzlich eine hohe Waschkraft aufweisen. Außerdem sollen die Natriumpercarbonatpartikel auch unter Druckeinwirkung keine Verbackung zeigen, so dass sie sich in Silobehältern ohne Verfestigung lagern lassen.

WO 97/19890 offenbart im Ausführungsbeispiel VB5 Natriumpercarbonatpartikel mit einem durch Wirbelschichtaufbaugranulation hergestellten Kern aus Natriumpercarbonat und einer aus Natriumsulfat und Natriumcarbonat bestehenden Hüllschicht, die Natriumsulfat und Natriumcarbonat in einem Gewichtsverhältnis von 50 : 50 enthält. Die Natriumpercarbonatpartikel zeigen eine hohe Lagerstabilität in Waschmitteln. WO 97/19890 enthält keine Lehre, wie ein Natriumpercarbonatpartikel beschaffen sein muss, um eine hohe Waschkraft im Waschmittel zu bewirken.

DE 26 22 610 offenbart im Ausführungsbeispiel VB5 Natriumpercarbonatpartikel mit einem durch Wirbelschichtaufbaugranulation hergestellten Kern aus Natriumpercarbonat und einer aus Natriumsulfat und Natriumcarbonat bestehenden Hüllschicht, die Natriumsulfat und Natriumcarbonat in einem Gewichtsverhältnis von 31 : 69 enthält. Die Natriumpercarbonatpartikel zeigen eine hohe Lagerstabilität in Waschmitteln. DE 26 22 610 enthält keine Lehre, wie ein Natriumpercarbonatpartikel beschaffen sein muss, um eine hohe Waschkraft im Waschmittel zu bewirken.

EP 0 651 053 A1 offenbart Natriumpercarbonatpartikel mit einer Natriumsulfat und Natriumcarbonat enthaltenden Hüllschicht, die Natriumsulfat und Natriumcarbonat in einem Molverhältnis von 1 : 0,1 bis 1 : 3 enthält. In den Ausführungsbeispielen werden Natriumpercarbonatpartikel mit einer aus Natriumsulfat und Natriumcarbonat bestehenden Hüllschicht offenbart, die Natriumsulfat und Natriumcarbonat in einem Molverhältnis von 1 : 0,29 enthält. Dies entspricht einem Gewichtsverhältnis von 82 : 18. EP 0 651 053 A1 enthält keine Offenbarung zur Struktur des Kerns der Partikel und keine Lehre, wie ein Natriumpercarbonatpartikel beschaffen sein muss, um eine hohe Waschkraft im Waschmittel zu bewirken.

EP 1 149 800 A1 offenbart Natriumpercarbonatpartikel mit einer inneren Hüllschicht, die ein Alkalimetallsilikat und mindestens ein Alkalimetallsulfat, -carbonat oder -bicarbonat enthält, sowie einer äußeren Hüllschicht, die ein Alkalimetallsulfat und mindestens ein Alkalimetallcarbonat oder -bicarbonat enthält. Der Anteil an Alkalimetallcarbonat oder -bicarbonat in der äußeren Hüllschicht beträgt vorzugsweise 10 bis 25 Gew.-%. Ausführungsbeispiel 4 offenbart Natriumpercarbonatpartikel mit einer inneren Hüllschicht aus Wasserglas, Natriumcarbonat und einem alpha-Olefinsulfonat und einer äußeren Hüllschicht aus Natriumsulfat, Natriumcarbonat und einem alpha-Olefinsulfonat. Die äußere Hüllschicht dieser Partikel enthält Natriumsulfat und Natriumcarbonat in einem Gewichtsverhältnis von 78 : 22, der Anteil von Natriumsulfat und Natriumcarbonat an der äußeren Hüllschicht beträgt 99,3 Gew.-%. Der Kern dieser Partikel ist durch Aufsprühen einer Lösung von Magnesiumsulfat in Wasserstoffperoxid auf eine Mischung aus festem Natriumcarbonat und Natriummetasilicat in einem Mischer und anschließendes Trocknen in einem Wirbelschichttrockner hergestellt. EP 1 149 800 A1 enthält keine Lehre, wie ein Natriumpercarbonatpartikel beschaffen sein muss, um eine hohe Waschkraft im Waschmittel zu bewirken.

Es wurde nun überraschend gefunden, dass Natriumpercarbonatpartikel mit einem durch Wirbelschichtaufbaugranulation hergestellten Kern aus Natriumpercarbonat und einer im wesentlichen aus Natriumsulfat und Natriumcarbonat bestehenden Hüllschicht, die Natriumsulfat und Natriumcarbonat in einem Gewichtsverhältnis von 95 : 5 bis 75 : 25 enthält, als Bestandteil in einem Waschmittel eine verbesserte Waschkraft des Waschmittels bewirken. Gleichzeitig zeigen sie keine Verbackung unter Druckeinwirkung und eine hohe Lagerstabilität im Waschmittel.

Gegenstand der Erfindung sind deshalb umhüllte Natriumpercarbonatpartikel mit einem durch Wirbelschichtaufbaugranulation erhältlichen Kern aus Natriumpercarbonat und einer Natriumsulfat und Natriumcarbonat enthaltenden Hüllschicht, wobei die Hüllschicht Natriumsulfat und Natriumcarbonat in einem Gewichtsverhältnis von 95 : 5 bis 75 : 25 enthält und der Anteil von Natriumsulfat und Natriumcarbonat an der Hüllschicht mindestens 80 Gew.-% beträgt. Gegenstand der Erfindung sind außerdem Waschmittel und Reinigungsmittel, die solche Natriumpercarbonatpartikel enthalten.

Die erfindungsgemäßen Natriumpercarbonatpartikel weisen einen Kern aus Natriumpercarbonat auf, der durch Wirbelschichtaufbaugranulation aus wässrigen Lösungen von Wasserstoffperoxid und Natriumcarbonat erhältlich ist. Durch eine solche Wirbelschichtaufbaugranulation wird ein Kernmaterial erhalten, das sich durch einen besonders dichten, schalenförmigen Aufbau und eine glattere Oberfläche von nach anderen Herstellverfahren erhaltenen Kernmaterialien unterscheidet.

Der Kern der erfindungsgemäßen Natriumpercarbonatpartikel besteht im Wesentlichen aus Natriumcarbonat-Perhydrat der Zusammensetzung 2 Na₂CO₃ · 3 H₂O₂. Er kann darüber hinaus noch geringe Mengen an bekannten Stabilisatoren für Persauerstoffverbindungen, wie zum Beispiel Magnesiumsalze, Silikate, Phosphate und/oder Chelatkomplexbildner enthalten. Der Anteil von Natriumpercarbonat im Kern der erfindungsgemäßen Natriumpercarbonatpartikel beträgt vorzugsweise mehr als 80 Gew.-% und besonders bevorzugt mehr als 95 Gew.-%. Der Anteil an organischen Kohlenstoffverbindungen im Kern beträgt vorzugsweise weniger als 1 Gew.-%, besonders bevorzugt weniger als 0,1 Gew.-%.

In einer bevorzugten Ausführungsform enthält der Kern geringe Mengen an Additiven, die auf den Aktivsauerstoffgehalt stabilisierend wirken, wobei der Anteil an stabilisierenden Additiven im Kern vorzugsweise weniger als 2 Gew.-% beträgt. Als stabilitätserhöhende Additive werden vorzugsweise Magnesiumsalze, Wasserglas, Stannate, Pyrophosphate, Polyphosphate sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium- oder Magnesiumsalze verwendet. In einer besonders bevorzugten Ausführungsform enthält der Kern als stabilisierendes Additiv ein Alkalimetallsilikat, vorzugsweise Wasserglas mit einem SiO₂/Na₂O-Modul im Bereich von 1 bis 3, in einer Menge von 0,1 bis 1 Gew.-%. In der am meisten bevorzugten Ausführungsform enthält der Kern zusätzlich zu dieser Menge an Alkalimetallsilikat noch eine Magnesiumverbindung in einer Menge von 50 bis 2000 ppm Mg²⁺.

Die erfindungsgemäßen umhüllten Natriumpercarbonatpartikel umfassen zusätzlich zum Kern aus durch Wirbelschichtaufbaugranulation erhältlichem Natriumpercarbonat noch eine Hüllschicht, die Natriumsulfat und Natriumcarbonat in einem Gewichtsverhältnis von 95 : 5 bis 75 : 25 enthält. Vorzugsweise liegt das Gewichtsverhältnis von Natriumsulfat und Natriumcarbonat im Bereich von 95 : 5 bis 80 : 20, besonders bevorzugt im Bereich von 90 : 10 bis 80 : 20. Der Anteil von Natriumsulfat und Natriumcarbonat an der Hüllschicht beträgt mindestens 80 Gew.-%, vorzugsweise mindestens 90 Gew.-%. Der Gewichtsanteil der Hüllschicht bezogen auf die Masse des Natriumpercarbonatpartikels beträgt vorzugsweise 2 bis 10 %, besonders bevorzugt 4 bis 7 %.

Das in der Hüllschicht enthaltene Natriumcarbonat liegt in der Hüllschicht vorzugsweise zu mehr als 80% in Form von Burkeit der Zusammensetzung Na₄(SO₄)₁₊ₙ(CO₃)₁₋ₙ vor, wobei n von 0 bis 0,5 beträgt. Der Anteil von Burkeit relativ zu anderen in den Natriumpercarbonatpartikeln enthaltenen Phasen, die Natriumcarbonat enthalten, lässt sich durch Rietveld-Analyse von Pulver-Röntgendiagrammen der Natriumpercarbonatpartikel bestimmen.
In einer bevorzugten Ausführungsform enthält die Natriumsulfat und Natriumcarbonat enthaltende Hüllschicht zusätzlich 0,1 bis 1 Gew.-% Natriumsilikat, besonders bevorzugt 0,2 bis 0,5 Gew.-% Natriumsilikat. Das Natriumsilikat ist vorzugsweise ein wasserlösliches Natriumsilikat, insbesondere ein Wasserglas. Durch den Zusatz geringer Mengen an Natriumsilikat lässt sich die Lagerstabilität der erfindungsgemäßen Natriumpercarbonatpartikel in Waschmitteln weiter verbessern, ohne die Silierbarkeit des Natriumpercarbonats zu beeinträchtigen.

Zusätzlich zu der erfindungsgemäßen Hüllschicht, die Natriumsulfat und Natriumcarbonat enthält, können die erfindungsgemäßen Natriumpercarbonatpartikel noch eine oder mehrere weitere Hüllschichten enthalten, wobei diese sowohl zwischen dem Kern und der erfindungsgemäßen Hüllschicht, als auch außerhalb der erfindungsgemäßen Hüllschicht angeordnet sein können. Vorzugsweise liegt die erfindungsgemäße Hüllschicht unmittelbar auf dem Kernmaterial aus Natriumpercarbonat auf.

Zwischen den Hüllschichten sowie zwischen der innersten Hüllschicht und dem Kern kann eine scharfe Grenze existieren, an der sich die Zusammensetzung sprunghaft ändert. In der Regel wird sich jedoch zwischen den einzelnen Hüllschichten, sowie zwischen der innersten Hüllschicht und dem Kern jeweils eine Übergangszone ausbilden, die die Komponenten beider aneinander grenzenden Schichten enthält. Solche Übergangszonen entstehen beispielsweise durch das Auftragen einer Hüllschicht in Form einer wässrigen Lösung, wobei zu Anfang des Schichtaufbaus ein Teil der darunter liegenden Schicht angelöst wird, so dass eine Übergangszone entsteht, die die Bestandteile beider Schichten enthält. In der bevorzugten Ausführungsform, bei der sich die erfindungsgemäße Hüllschicht unmittelbar auf dem Kernmaterial aus Natriumpercarbonat befindet, kann sich so zwischen dem Kern und der erfindungsgemäßen Hüllschicht eine Übergangsschicht bilden, die Natriumsulfat, Natriumcarbonat, Natriumhydrogencarbonat und Natriumpercarbonat, sowie Mischsalze dieser Komponenten enthält.

Die erfindungsgemäße Hüllschicht, die Natriumsulfat und Natriumcarbonat enthält, ist vorzugsweise so ausgebildet, dass sie das darunter liegende Material zu mehr zu als 95 %, vorzugsweise zu mehr als 98 % und insbesondere vollständig bedeckt.

In einer bevorzugten Ausführungsform weisen die erfindungsgemäßen Natriumpercarbonatpartikel eine Hüllschicht auf, die durch Aufsprühen einer wässrigen Lösung erhalten wird, die Natriumsulfat und Natriumcarbonat gelöst enthält und die insgesamt nicht mehr als 25 Gew.-%, vorzugsweise 10 bis 25 Gew.-%, gelöste Salze enthält. Während der Stand der Technik lehrt, zum Aufbringen einer Hüllschicht möglichst konzentrierte Lösungen der Hüllkomponenten zu verwenden, um die zu verdampfende Wassermenge gering zu halten, wurde nun überraschend gefunden, dass Natriumpercarbonatpartikel mit einer erfindungsgemäßen Hüllschicht, die Natriumsulfat und Natriumcarbonat enthält und die durch Aufsprühen einer wässrigen Lösung mit nicht mehr als 25 Gew.-% gelösten Salzen erhältlich ist, eine bessere Lagerstabilität in Waschmittel- und Reinigungsmittelzubereitungen aufweisen als Natriumpercarbonatpartikel, die durch Aufsprühen einer wässrigen Lösung mit einem höheren Gehalt an gelösten Salzen erhältlich sind.

Während des Aufsprühens der wässrigen Lösung, die Natriumsulfat und Natriumcarbonat gelöst enthält, wird vorzugsweise bereits der größte Teil des darin enthaltenen Wassers, insbesondere mehr als 90% des in der wässrigen Lösung enthaltenen Wassers, durch Wärmezufuhr verdampft, so dass während des Aufbringens der Hüllschicht nur ein geringer Teil des darunter liegenden Materials wieder angelöst wird und sich bereits während des Aufsprühens eine feste Hüllschicht ausbildet. Das Aufbringen der erfindungsgemäßen Hüllschicht erfolgt vorzugsweise durch Versprühen einer Natriumsulfat und Natriumcarbonat enthaltenden wässrigen Lösung in einer Wirbelschicht und besonders bevorzugt nach dem in EP-A 0 970 917 beschriebenen Verfahren, mit dem bereits mit geringen Mengen an Hüllschichtmaterial eine dichte Hüllschicht erreicht werden kann. Das Aufbringen der Hüllschicht in einer Wirbelschicht erfolgt vorzugsweise unter Zufuhr eines Trocknungsgases zur Wirbelschicht, so dass sich in der Wirbelschicht eine Temperatur im Bereich von 30 bis 90 °C, vorzugsweise 30 bis 55 °C, einstellt. Überraschenderweise führt das Aufsprühen der Hüllschicht bei einer Temperatur der Wirbelschicht im Bereich von 30 bis 55 °C zu Natriumpercarbonatpartikeln, die eine geringere Verbackungsneigung und eine bessere Lagerstabilität in Waschmitteln aufweisen als Natriumpercarbonatpartikel, deren Hüllschicht durch Aufsprühen einer Lösung gleicher Zusammensetzung bei einer Temperatur der Wirbelschicht außerhalb dieses Bereichs aufgebracht wurde.

Die erfindungsgemäßen Natriumpercarbonatpartikel mit einem durch Wirbelschichtaufbaugranulation erhältlichen Kern aus Natriumpercarbonat und einer Hüllschicht, die Natriumsulfat und Natriumcarbonat in einem Gewichtsverhältnis von 95 : 5 bis 75 : 25 enthält, bewirken in Waschmitteln überraschenderweise eine höhere Waschkraft, als sie mit der gleichen Menge an Natriumpercarbonatpartikeln erzielt wird, die einen nach einem anderen Herstellverfahren erhältlichen Kern und eine sonst gleich zusammengesetzte Hüllschicht aufweisen. Ebenso bewirken sie eine höhere Waschkraft, als Natriumpercarbonatpartikel mit einem durch Wirbelschichtaufbaugranulation erhältlichen Kern aus Natriumpercarbonat und einer vergleichbar dicken Hüllschicht, die nur Natriumsulfat enthält.

Gleichzeitig zeigen die erfindungsgemäßen Natriumpercarbonatpartikel eine besonders hohe Lagerstabilität in Waschmitteln, die noch höher ist als die Lagerstabilität von Natriumpercarbonatpartikeln mit einem durch Wirbelschichtaufbaugranulation erhältlichen Kern aus Natriumpercarbonat und einer vergleichbar dicken Hüllschicht, die nur Natriumsulfat oder Natriumsulfat und Natriumcarbonat mit einem höheren Natriumcarbonatanteil enthält.

Die erfindungsgemäßen Natriumpercarbonatpartikel zeigen außerdem keine oder nur eine geringe Verbackung unter Druckeinwirkung und nur eine geringe Wärmefreisetzung in Substanz und können deshalb sicher in einem Silo gelagert werden, ohne dass es zu Verbackungen im Silo oder zu einer Selbsterwärmung des Siloinhalts kommt.

In einer weiteren Ausführungsform der Erfindung können die umhüllten Natriumpercarbonatpartikel eine zusätzliche Hüllschicht aufweisen, die als Hauptbestandteil ein Alkalimetallsilikat mit einem Modul SiO₂ zu Alkalimetalloxid von mehr als 2,5 enthält. Die zusätzliche Hüllschicht liegt vorzugsweise über der erfindungsgemäßen Hüllschicht. Die zusätzliche Hüllschicht enthält als Hauptbestandteil ein Alkalimetallsilikat, wenn sie keine weitere Komponente in einem Gewichtsanteil enthält, der größer ist als der Anteil an Alkalimetallsilikat. Der Modul des Alkalimetallsilikats liegt vorzugsweise im Bereich von 3 bis 5 und besonders bevorzugt im Bereich von 3,2 bis 4,2. Der Anteil der zusätzlichen Hüllschicht an den erfindungsgemäßen umhüllten Natriumpercarbonatpartikeln liegt vorzugsweise im Bereich von 0,2 bis 3 Gew.-%. Der Anteil an Alkalimetallsilikat im Material der zusätzlichen Hüllschicht beträgt vorzugsweise mehr als 50 Gew.-% und besonders bevorzugt mehr als 80 Gew.-%. Als Alkalimetallsilikat wird in der zusätzlichen Hüllschicht vorzugsweise Natriumsilikat und besonders bevorzugt Natriumwasserglas eingesetzt.

Erfindungsgemäß umhüllte Natriumpercarbonatpartikel mit einer zusätzlichen Hüllschicht, die als Hauptbestandteil ein Alkalimetallsilikat mit einem Modul SiO₂ zu Alkalimetalloxid von mehr als 2,5 enthält, zeigen zusätzlich eine verzögerte Lösezeit in Wasser und eine verbesserte Lagerstabilität in wasserhaltigen flüssigen oder gelförmigen Medien bei Wassergehalten von bis zu 15 Gew.-%. Sie lassen sich deshalb vorteilhaft zur Herstellung von flüssigen oder gelförmigen Waschmittel- oder Reinigungsmittelzubereitungen einsetzen.

In einer weiteren Ausführungsform der Erfindung können die umhüllten Natriumpercarbonatpartikel auf ihrer Oberfläche zusätzlich 0,01 bis 1 Gew.-%, vorzugsweise 0,1 bis 0,5 Gew.-%, eines feinteiligen Oxids der Elemente Si, Al oder Ti oder eines Mischoxids dieser Elemente aufweisen. Geeignete feinteilige Oxide sind zum Beispiel pyrogene Oxide, die durch Flammhydrolyse von flüchtigen Verbindungen der Elemente Silicium, Aluminium oder Titan oder von Mischungen dieser Verbindungen erhalten werden. Die auf diesem Weg erhältlichen pyrogenen Oxide oder Mischoxide weisen vorzugsweise eine mittlere Primärpartikelgröße von weniger als 50 nm auf und können zu größeren Partikeln aggregiert sein, deren mittlere Partikelgröße vorzugsweise weniger als 20 µm beträgt. Ebenso geeignet sind gefällte Oxide, die aus wässrigen Lösungen von Verbindungen der Elemente Silicium, Aluminium oder Titan oder Mischungen dieser Verbindungen ausgefällt wurden. Die gefällten Oxide, bzw. Mischoxide können neben Silicium, Aluminium und/oder Titan noch geringe Mengen an Alkalimetall- oder Erdalkalimetallionen enthalten. Die mittlere Partikelgröße der gefällten Oxide beträgt vorzugsweise weniger als 50 µm und besonders bevorzugt weniger als 20 µm. Die spezifische Oberfläche der feinteiligen Oxide nach BET liegt vorzugsweise im Bereich von 100 bis 300 m²/g.

Vorzugsweise weisen die umhüllten Natriumpercarbonatpartikel auf ihrer Oberfläche ein hydrophobiertes feinteiliges Oxid und besonders bevorzugt eine hydrophobierte pyrogene oder gefällte Kieselsäure auf. Hydrophobierte Oxide im Sinne der Erfindung sind Oxide, die an ihrer Oberfläche über chemische Bindungen gebundene organische Reste aufweisen und von Wasser nicht benetzt werden. Hydrophobierte Oxide können zum Beispiel durch Umsetzen von pyrogenen oder gefällten Oxiden mit Organosilanen, Silazanen oder Polysiloxanen hergestellt werden. Geeignete Siliciumverbindungen zur Herstellung von hydrophobierten Oxiden sind aus EP-A 0 722 992, Seite 3, Zeile 9 bis Seite 6, Zeile 6 bekannt. Besonders bevorzugt sind hydrophobierte Oxide, die durch Umsetzung eines feinteiligen Oxids mit einer Siliciumverbindung der in EP-A 0 722 992 angeführten Verbindungsklassen (a) bis (e) und (k) bis (m) hergestellt wurden. Die hydrophobierten feinteiligen Oxide weisen vorzugsweise eine Methanolbenetzbarkeit von mindestens 40 auf.

Erfindungsgemäß umhüllte Natriumpercarbonatpartikel, die auf ihrer Oberfläche zusätzlich ein feinteiliges Oxid aufweisen, zeigen eine noch geringere Neigung zur Verbackung bei der Lagerung, vor allem bei der Lagerung unter Druckbelastung und sind deshalb noch besser silierbar. Darüber hinaus weisen solche Partikel in Waschmittel- und Reinigungsmittel-Zubereitungen eine weiter erhöhte Lagerstabilität auf.

Die erfindungsgemäßen Natriumpercarbonatpartikel weisen vorzugsweise einen massenbezogenen Median der Partikelgröße im Bereich von 0,2 bis 5 mm und besonders bevorzugt im Bereich von 0,5 bis 2 mm auf. Bevorzugt werden Natriumpercarbonatpartikel mit einem geringen Feinkornanteil, vorzugsweise mit einem Anteil von weniger als 10 Gew.-% Partikel kleiner als 0,2 mm und besonders bevorzugt weniger als 10 Gew.-% Partikel mit einer Partikelgröße von weniger als 0,3 mm. Durch eine entsprechende Auswahl der Partikelgröße lässt sich die Lagerstabilität der erfindungsgemäßen Natriumpercarbonatpartikel in Waschmittel- und Reinigungsmittelzubereitungen weiter verbessern.

Die erfindungsgemäßen umhüllten Natriumpercarbonatpartikel lassen sich vorteilhaft als bleichwirksamer Bestandteil in Waschmitteln und Reinigungsmitteln verwenden. Waschmittel im Sinne der Erfindung sind alle Zubereitungen, die zum Reinigen von Textilien in einer wässrigen Waschflotte geeignet sind. Reinigungsmittel im Sinne der Erfindung sind alle Zubereitungen, die im Zusammenwirken mit Wasser zur Reinigung von Oberflächen geeignet sind, die kein oder nur wenig Wasser aufsaugen. Eine im Sinne der Erfindung bevorzugte Form von Reinigungsmitteln sind Maschinengeschirrreiniger, die zum maschinellen Reinigen von Geschirr und Besteck geeignet sind.

Ein weiterer Gegenstand der Erfindung sind Waschmittel und Reinigungsmittel, die erfindungsgemäß umhüllte Natriumpercarbonatpartikel enthalten. Die erfindungsgemäßen Waschmittel und Reinigungsmittel enthalten die erfindungsgemäßen umhüllten Natriumpercarbonatpartikel vorzugsweise in einer Menge von 1 bis 40 Gew.-% bezogen auf die Gesamtmenge des Waschmittels beziehungsweise Reinigungsmittels.

Die erfindungsgemäßen Waschmittel und Reinigungsmittel können eine feste Form aufweisen und können dann neben den erfindungsgemäßen umhüllten Natriumpercarbonatpartikeln noch weitere Komponenten in Form von Pulver oder in Form von Granulaten enthalten. Sie können darüber hinaus auch verpresste Formkörper umfassen, wobei die erfindungsgemäßen umhüllten Natriumpercarbonatpartikeln Bestandteil der verpressten Formkörper sein können. Solche verpressten Formkörper in Form von Extrudaten, Pellets, Briketts oder Tabletten können durch Verfahren der Pressagglomeration, insbesondere durch Extrusion, Strangpressen, Lochpressen, Walzenkompaktieren oder Tablettieren hergestellt werden. Für die Durchführung der Pressagglomeration können die erfindungsgemäßen Waschmittel oder Reinigungsmittel zusätzlich ein Bindemittel enthalten, das den Formkörpern bei der Pressagglomeration eine höhere Festigkeit verleiht. Vorzugsweise wird bei erfindungsgemäßen Waschmitteln und Reinigungsmitteln, die verpresste Formkörper umfassen, aber kein zusätzliches Bindemittel verwendet und einer der waschaktiven Bestandteile, zum Beispiel ein nichtionisches Tensid, erfüllt die Funktion des Bindemittels.

Die erfindungsgemäßen Waschmittel und Reinigungsmittel können darüber hinaus auch eine flüssige Form oder Gelform aufweisen und die erfindungsgemäßen umhüllten Natriumpercarbonatpartikel in einer flüssigen Phase, beziehungsweise einer Gelphase dispergiert enthalten. Neben den erfindungsgemäßen umhüllten Natriumpercarbonatpartikeln können in der flüssigen Phase, beziehungsweise der Gelphase weitere Partikel dispergiert sein. Die rheologischen Eigenschaften der flüssigen Phase, beziehungsweise der Gelphase werden vorzugsweise so eingestellt, dass die darin dispergierten Partikel suspendiert bleiben und sich während einer Lagerung nicht absetzen. Die Zusammensetzung einer flüssigen Phase wird deshalb vorzugsweise so gewählt, dass sie thixotrope oder pseudoplastische Fließeigenschaften aufweist. Zur Einstellung solcher Fließeigenschaften können Suspensionshilfsmittel, wie quellende Tone, insbesondere Montmorillonite, gefällte und pyrogene Kieselsäuren, pflanzliche Gummis, insbesondere Xanthane und polymere Gelierungsmittel, wie Carboxylgruppen enthaltende Vinylpolymere zugesetzt werden.

Erfindungsgemäße Waschmittel und Reinigungsmittel in flüssiger Form oder Gelform enthalten vorzugsweise erfindungsgemäße umhüllte Natriumpercarbonatpartikel mit einer zusätzlichen Hüllschicht, die als Hauptbestandteil ein Alkalimetallsilikat mit einem Modul SiO₂ zu Alkalimetalloxid von mehr als 2,5 enthält. In dieser Ausführungsform können die Waschmittel und Reinigungsmittel bis zu 15 Gew.-% Wasser enthalten, ohne dass es während einer Lagerung zu einem Anlösen der umhüllten Natriumpercarbonatpartikel und einem dadurch bewirkten Freisetzen von Wasserstoffperoxid in die flüssige Phase beziehungsweise Gelphase kommt.

Die erfindungsgemäßen Waschmittel und Reinigungsmittel können neben den erfindungsgemäßen umhüllten Natriumpercarbonatpartikeln als weitere Komponenten beispielsweise noch Tenside, Builder, alkalische Komponenten, Bleichaktivatoren, Enzyme, chelatisierende Komplexbildner, Vergrauungsinhibitoren, Schauminhibitoren, optische Aufheller, Duftstoffe und Farbstoffe enthalten.

Als Tenside eignen sich für die erfindungsgemäßen Waschmittel und Reinigungsmittel vor allem anionische, nichtionische und kationische Tenside.

Geeignete anionische Tenside sind zum Beispiel Tenside mit Sulfonatgruppen, vorzugsweise Alkylbenzolsulfonate, Alkansulfonate, alpha-Olefinsulfonate, alpha-Sulfofettsäureester oder Sulfosuccinate. Bei Alkylbenzolsulfonaten werden solche mit einer geradkettigen oder verzweigten Alkylgruppe mit 8 bis 20 Kohlenstoffatomen, insbesondere mit 10 bis 16 Kohlenstoffatomen bevorzugt. Bevorzugte Alkansulfonate sind solche mit gradkettigen Alkylketten mit 12 bis 18 Kohlenstoffatomen. Bei alpha-Olefinsulfonaten werden vorzugsweise die Reaktionsprodukte der Sulfonierung von alpha-Olefinen mit 12 bis 18 Kohlenstoffatomen eingesetzt. Bei den alpha-Sulfofettsäureestern werden Sulfonierungsprodukte von Fettsäureestern aus Fettsäuren mit 12 bis 18 Kohlenstoffatomen und kurzkettigen Alkoholen mit 1 bis 3 Kohlenstoffatomen bevorzugt. Als anionische Tenside eignen sich auch Tenside mit einer Sulfatgruppe im Molekül, vorzugsweise Alkylsulfate und Ethersulfate. Bevorzugte Alkylsulfate sind solche mit geradkettigen Alkylresten mit 12 bis 18 Kohlenstoffatomen. Geeignet sind außerdem beta-verzweigte Alkylsulfate und in der Mitte der längsten Alkylkette ein- oder mehrfach alkylsubstituierte Alkylsulfate. Bevorzugte Ethersulfate sind die Alkylethersulfate, die durch Ethoxylierung von linearen Alkoholen mit 12 bis 18 Kohlenstoffatomen mit 2 bis 6 Ethylenoxideinheiten und anschließende Sulfatierung erhalten werden. Als anionische Tenside können schließlich auch Seifen verwendet werden, wie zum Beispiel Alkalimetallsalze von Laurinsäure, Myristinsäure, Palmitinsäure, Stearinsäure und/oder natürlichen Fettsäuregemischen, wie zum Beispiel Kokos-, Palmkern- oder Talgfettsäuren.

Als nicht-ionische Tenside eignen sich zum Beispiel alkoxylierte Verbindungen, insbesondere ethoxylierte und propoxylierte Verbindungen. Besonders geeignet sind Kondensationsprodukte von Alkylphenolen oder Fettalkoholen mit 1 bis 50 mol, vorzugsweise 1 bis 10 mol Ethylenoxid und/oder Propylenoxid. Ebenfalls geeignet sind Polyhydroxyfettsäureamide, in denen am Amidstickstoff ein organischer Rest mit einer oder mehreren Hydroxylgruppen, welche auch alkoxyliert sein können, gebunden ist. Ebenfalls als nicht-ionische Tenside geeignet sind Alkylglycoside mit einer geradkettigen oder verzweigten Alkylgruppe mit 8 bis 22 Kohlenstoffatomen, insbesondere mit 12 bis 18 Kohlenstoffatomen und einem Mono- oder Diglycosidrest, der vorzugsweise von Glucose abgeleitet ist.

Geeignete kationische Tenside sind beispielsweise mono- und dialkoxylierte quaternäre Amine mit einem am Stickstoff gebundenen C₆- bis C₁₈-Alkylrest und ein oder zwei Hydroxyalkylgruppen.

Die erfindungsgemäßen Waschmittel und Reinigungsmittel enthalten in der Regel außerdem Builder, die in der Lage sind, bei der Verwendung im Wasser gelöste Calcium- und Magnesiumionen zu binden. Geeignete Builder sind Alkalimetallphosphate und Alkalimetallpolyphosphate, insbesondere Pentanatriumtriphosphat; wasserlösliche und wasserunlösliche Natriumsilikate, insbesondere Schichtsilikate der Formel Na₅Si₂O₅; Zeolithe der Strukturen A, X und/oder P; sowie Trinatriumcitrat. Zusätzlich zu den Buildern können außerdem organische Cobuilder, wie zum Beispiel Polyacrylsäure, Polyasparaginsäure und/oder Acrylsäure-Copolymere mit Methacrylsäure, Acrolein oder sulfonsäurehaltigen Vinylmonomeren, sowie deren Alkalimetallsalze verwendet werden.

Die erfindungsgemäßen Waschmittel und Reinigungsmittel enthalten außerdem in der Regel alkalische Komponenten, die bei bestimmungsgemäßer Anwendung in der Waschflotte, beziehungsweise der wässrigen Reinigungsmittellösung einen pH-Wert im Bereich von 8 bis 12 bewirken. Als alkalische Komponenten sind vor allem Natriumcarbonat, Natriumsesquicarbonat, Natriummetasilikat und andere lösliche Alkalimetallsilikate geeignet.

Als Bleichaktivatoren eignen sich für die erfindungsgemäßen Waschmittel und Reinigungsmittel vor allem Verbindungen mit einer oder mehreren perhydrolysefähigen an Stickstoff oder an Sauerstoff gebundenen Acylgruppen, die mit dem aus den Natriumpercarbonatpartikeln freigesetzten Wasserstoffperoxid in der Waschflotte, beziehungsweise der wässrigen Reinigungsmittellösung zu Peroxycarbonsäuren reagieren. Beispiele für solche Verbindungen sind mehrfach acylierte Alkylendiamine, wie insbesondere Tetraacetylethylendiamin (TAED); acylierte Triazinderivate, insbesondere 1,5-Diacetyl-2,4-dioxohexahydro-1,3,5-triazin (DADHT); acylierte Glykolurile, insbesondere Tetraacetylglykoluril (TAGU); N-Acylimide, insbesondere N-Nonanoylsuccinimid (NOSI); acylierte Phenolsulfonate, insbesondere n-Nonanoyl- oder iso-Nonanoyloxybenzolsulfonat (n- bzw. iso-NOBS); Carbonsäureanhydride, wie Phthalsäureanhydrid; acylierte mehrwertige Alkohole, wie Ethylenglykoldiacetat, 2,5-Diacetoxy-2,5-dihydrofuran, acetyliertes Sorbitol und Mannitol und acylierte Zucker, wie Pentaacetylglucose; Enolester; sowie N-acylierte Lactame, insbesondere N-Acylcaprolactame und N-Acylvalerolactame. Ebenfalls als Bleichaktivatoren geeignet sind aminofunktionalisierte Nitrile und deren Salze (Nitrilquats), die zum Beispiel aus der Zeitschrift Tenside Surf. Det. 1997, 34(6), Seiten 404-409 bekannt sind. Als Bleichaktivatoren können außerdem Übergangsmetallkomplexe eingesetzt werden, die Wasserstoffperoxid zur bleichenden Fleckentfernung aktivieren können. Geeignete Übergangsmetallkomplexe sind beispielsweise bekannt aus EP-A 0 544 490 Seite 2, Zeile 4 bis Seite 3, Zeile 57; WO 00/52124 Seite 5, Zeile 9 bis Seite 8, Zeile 7 und Seite 8, Zeile 19 bis Seite 11, Zeile 14; WO 04/039932, Seite 2, Zeile 25 bis Seite 10, Zeile 21; WO 00/12808 Seite 6, Zeile 29 bis Seite 33, Zeile 29; WO 00/60043 Seite 6, Zeile 9 bis Seite 17, Zeile 22; WO 00/27975, Seite 2, Zeilen 1 bis 18 und Seite 3, Zeile 7 bis Seite 4, Zeile 6; WO 01/05925, Seite 1, Zeile 28 bis Seite 3, Zeile 14; WO 99/64156, Seite 2, Zeile 25 bis Seite 9, Zeile 18; sowie GB-A 2 309 976, Seite 3, Zeile 1 bis Seite 8, Zeile 32.

Die erfindungsgemäßen Waschmittel und Reinigungsmittel können weiterhin Enzyme enthalten, die die Reinigungswirkung verstärken, insbesondere Lipasen, Cutinasen, Amylasen, neutrale und alkalische Proteasen, Esterasen, Zellulasen, Pektinasen, Lactasen und/oder Peroxidasen. Die Enzyme können dabei an Trägerstoffe adsorbiert oder in Hüllsubstanzen eingebettet sein, um sie gegen Zersetzung zu schützen.

Die erfindungsgemäßen Waschmittel und Reinigungsmittel können außerdem chelatisierende Komplexbildner für Übergangsmetalle enthalten, mit denen sich eine katalytische Zersetzung von Aktivsauerstoffverbindungen in der Waschflotte, beziehungsweise der wässrigen Reinigungsmittellösung vermeiden läßt. Geeignet sind zum Beispiel Phosphonate, wie Hydroxyethan-1,1-disphosphonat, Nitrilotrimethylenphosphonat, Diethylentriaminpenta(methylenphosphonat), Ethlyendiamintetra(methylenphosphonat), Hexamethylendiamintetra(methylenphosphonat) und deren Alkalimetallsalze. Ebenfalls geeignet sind Nitrilotriessigsäure und Polyaminocarbonsäuren, wie insbesondere Ethylendiamintetraessigsäure, Diethylentriaminpentaessigsäure, Ethylendiamin-N,N'-disuccinsäure, Methylglycindiessigsäure und Polyaspartate, sowie deren Alkalimetall- und Ammoniumsalze. Schließlich sind auch mehrwertige Carbonsäuren und insbesondere Hydroxycarbonsäuren, wie insbesondere Weinsäure und Zitronensäure als chelatisierende Komplexbildner geeignet.

Die erfindungsgemäßen Waschmittel können zusätzlich Vergrauungsinhibitoren enthalten, die von der Faser abgelösten Schmutz suspendiert halten und ein Wiederaufziehen des Schmutzes auf die Faser verhindern. Geeignete Vergrauungsinhibitoren sind zum Beispiel Celluloseether, wie Carboxymethylcellulose und deren Alkalimetallsalze, Methylcellulose, Hydroxyethylcellulose und Hydroxypropylcellulose. Ebenfalls geeignet ist Polyvinylpyrrolidon.

Die erfindungsgemäßen Waschmittel und Reinigungsmittel können weiterhin auch Schauminhibitoren enthalten, die die Schaumbildung in der Waschflotte verringern. Geeignete Schauminhibitoren sind zum Beispiel Organopolysiloxane wie Polydimethylsiloxan, Paraffine und/oder Wachse, sowie deren Gemische mit feinteiligen Kieselsäuren.

Die erfindungsgemäßen Waschmittel können gegebenenfalls optische Aufheller enthalten, die auf die Faser aufziehen, im UV-Bereich Licht absorbieren und blau fluoreszieren, um eine Vergilbung der Faser auszugleichen. Geeignete optische Aufheller sind zum Beispiel Derivate der Diaminostilbendisulfonsäure, wie Alkalimetallsalze von 4,4'-Bis-(2-anilino-4-morpholino-1,3,5-triazinyl-6-amino)-stilben-2,2'-disulfonsäure oder substituierte Diphenylstyryle, wie Alkalimetallsalze von 4,4'-Bis-(2-sulfostyrlyl)-diphenyl.

Die erfindungsgemäßen Waschmittel und Reinigungsmittel können schließlich auch noch Duftstoffe und Farbstoffe enthalten.

Erfindungsgemäße Waschmittel und Reinigungsmittel in flüssiger Form oder Gelform können zusätzlich noch bis zu 30 Gew.-% organische Lösungsmittel, wie zum Beispiel Methanol, Ethanol, n-Propanol, Isopropanol, n-Butanol, Ethylenglykol, 1,2-Propylenglykol, 1,3-Propylenglykol, 1,4-Butylenglykol, Glycerin, Diethylenglykol, Ethylenglykolmethylether, Ethanolamin, Diethanolamin und/oder Triethanolamin enthalten.

Die erfindungsgemäßen Reinigungsmittel zeigen gegenüber Reinigungsmitteln, die nicht erfindungsgemäß umhüllte Natriumpercarbonatpartikel enthalten, eine bessere Lagerstabilität mit geringeren Verlusten an Aktivsauerstoffgehalt bei einer Lagerung unter feuchten Bedingungen.

Eine Ausführungsform der erfindungsgemäßen Reinigungsmittel sind Maschinengeschirrreiniger, vorzugsweise in Form von Tabletten, wobei die Geschirrreiniger neben den erfindungsgemäßen umhüllten Natriumpercarbonatpartikeln noch ein Silberkorrosionsschutzmittel enthalten können. Silberkorrosionsschutzmittel sind Mittel, die das Anlaufen von Nichteisenmetallen, insbesondere von Silber, während der maschinellen Reinigung mit dem Maschinengeschirrreiniger verhindern oder vermindern. Als Silberkorrosionsschutzmittel eignen sich Verbindungen aus der Reihe der Triazole, Benzotriazole, Bisbenzotriazole, Aminotriazole und Alkylaminotriazole. Die Verbindungen der genannten Stoffklassen können dabei auch Substituenten, wie zum Beispiel lineare oder verzweigte Alkylgruppen mit 1 bis 20 C-Atomen, sowie Vinyl-, Hydroxy-, Thiol- oder Halogenreste aufweisen. Bei Bisbenzotriazolen sind Verbindungen bevorzugt, in denen die beiden Benzotriazolgruppen jeweils in 6-Stellung über eine Gruppe X verbunden sind, worin X eine Bindung, eine geradkettige, gegebenenfalls mit einer oder mehreren C₁-bis C₄-Alkylgruppen substituierte Alkylengruppe mit bevorzugt 1 bis 6 Kohlenstoffatomen, ein Cycloalkylrest mit mindestens 5 Kohlenstoffatomen, eine Carbonylgruppe, eine Sulfonylgruppe, ein Sauerstoff- oder ein Schwefelatom sein kann. Ein besonders bevorzugtes Silberkorrosionsschutzmittel ist Tolyltriazol.

### Beispiele

### Herstellung von umhüllten Natriumpercarbonatpartikeln

Zur Herstellung der umhüllten Natriumpercarbonatpartikel wurden Natriumpercarbonatpartikel eingesetzt, die nach dem in EP-B 0 716 640 beschriebenen Verfahren durch Wirbelschicht-Aufbaugranulation aus wässriger Wasserstoffperoxidlösung und wässriger Sodalösung hergestellt wurden und einen mittleren Teilchendurchmesser x₅₀ von 0,78 mm und einen Feinkornanteil von kleiner 0,2 mm von weniger als 2 Gew.-% aufwiesen. Die Hüllschicht wurde auf diese Partikel nach dem in EP-B 0 863 842 in Abschnitt [0021] beschriebenen Verfahren aufgebracht durch Aufsprühen einer 20 Gew.-% wässrigen Lösung der Hüllstoffe in einer Wirbelschicht bei einer Wirbelschichttemperatur von 55 bis 60 °C und gleichzeitiges Verdampfen von Wasser. Die in Tabelle 1 in Gewichtsprozent angegebenen Hüllstoffmengen beziehen sich auf die aufgesprühte Gesamtmenge an Hüllstoffen, gerechnet ohne Kristallwasser, relativ zur Gesamtmenge an eingesetzten Natriumpercarbonatpartikeln und Hüllstoffen.

### Lagerstabilität in Waschpulver

Zur Bestimmung der Lagerstabilität in Waschpulver wurden 405 g zeolithhaltiges Vollwaschmittelpulver IEC-A* BASE (wfk-Testgewebe GmbH, Krefeld) mit 15 g TAED und 80 g Natriumpercarbonat in einem Taumelmischer mindestens 10 min gemischt. Die Mischung wurde in ein wasserabweisend imprägniertes E2-Waschmittelpaket (Abmessung 19 x 14 x 4,5 cm) gefüllt, das mit Heißkleber verschlossen wurde. Das Waschmittelpaket wurde dann im Klimaschrank bei 35 °C und 80 % relativer Luftfeuchte gelagert. Nach Abkühlen des Waschmittelpakets auf Raumtemperatur außerhalb des Klimaschranks wurde der Inhalt des Waschmittelpakets über einen Probenteiler in Proben von je 12 g aufgeteilt. Der Aktivsauerstoffgehalt vor und nach Lagerung wurde in üblicher Weise permanganometrisch bestimmt. Aus dem Aktivsauerstoffgehalt vor der Lagerung und dem Aktivsauerstoffgehalt nach 8 Wochen Lagerung wurde als Maß für die Lagerstabilität in Waschpulver der Erhalt des Aktivsauerstoffgehalts (Oa-Erhalt) in Prozent ermittelt.

**Tabelle 1**

| Lagerstabilität von umhüllten Natriumpercarbonatpartikeln in Waschpulver | | |
|---|---|---|
| Zusammensetzung der Hüllschicht in Gewichtsteilen | Hüllstoffmenge [Gew.-%] | Lagerstabilität [Oa-Erhalt in Prozent] |
| Na₂SO₄ 100* | 4,25 | 49 |
| Na₂SO₄/Na₂CO₃ 90:10 | 4,25 | 75 |
| Na₂SO₄/Na₂CO₃ 80:20 | 4,25 | 78 |
| Na₂SO₄/Na₂CO₃ 70:30* | 4,25 | 51 |
| Na₂SO₄/Na₂CO₃ 60:40* | 4,25 | 42 |
| Na₂SO₄ 100* | 4 | 53 |
| Na₂SO₄/Na₂CO₃/NaWG^{‡} 89, 88:9, 88:0,25 | 4 | 81 |
| Na₂SO₄/Na₂CO₃/NaWG^{‡} 89, 75:9,75:0,5 | 4 | 82 |

| | | |
|---|---|---|
| * Nicht erfindungsgemäß ^{‡} NaWG = Natronwasserglas | | |

Die Versuche wurden für eine Hüllstoffzusammensetzung von 90 Gewichtsteilen Natriumsulfat und 10 Gewichtsteilen Natriumcarbonat bzw. reines Natriumsulfat wiederholt, wobei 4 Gew.-% Hüllstoffe mit einer konstanten Sprührate von 11 g/min aufgesprüht wurden und die Konzentration der Hüllstoffe in der aufgesprühten Lösung von 15 bis 30 Gew.-% variiert wurde.

**Tabelle 2**

| Lagerstabilität von umhüllten Natriumpercarbonatpartikeln in Waschpulver | | | | |
|---|---|---|---|---|
| Zusammensetzung der Hüllschicht in Gewichtsteilen | Lagerstabilität in Abhängigkeit von der Konzentration der aufgesprühten Lösung [Oa-Erhalt in Prozent] | | | |
| | 15 Gew.-% | 20 Gew.-% | 25 Gew.-% | 30 Gew.-% |
| Na₂SO₄ 100* | 45 | 53 | 43 | 44 |
| Na₂SO₄/Na₂CO₃ 90:10 | 66 | 79 | 68 | 53 |

| | | | | |
|---|---|---|---|---|
| * Nicht erfindungsgemäß | | | | |

Die Versuche wurden für eine Hüllstoffzusammensetzung von 90 Gewichtsteilen Natriumsulfat und 10 Gewichtsteilen Natriumcarbonat bzw. reines Natriumsulfat wiederholt, wobei 4 Gew.-% Hüllstoffe als 20 Gew.-% Lösung aufgesprüht wurden und die Temperatur der Wirbelschicht während des Aufsprühens von 25 bis 85 °C variiert wurde.

**Tabelle 3**

| Lagerstabilität von umhüllten Natriumpercarbonatpartikeln in Waschpulver | | | | |
|---|---|---|---|---|
| Zusammensetzung der Hüllschicht in Gewichtsteilen | Lagerstabilität in Abhängigkeit von der Wirbelschichttemperatur [Oa-Erhalt in Prozent] | | | |
| | 35 °C | 45 °C | 55 °C | 65 °C |
| Na₂SO₄ 100* | 41 | 48 | 51 | |
| Na₂SO₄/Na₂CO₃ 90:10 | 79 | 82 | 72 | 70 |

| | | | | |
|---|---|---|---|---|
| * Nicht erfindungsgemäß | | | | |

### Bestimmung des Primärwaschvermögens

Die Versuche zur Herstellung von umhülltem Natriumpercarbonat wurden für eine Hüllstoffzusammensetzung von 90 Gewichtsteilen Natriumsulfat und 10 Gewichtsteilen Natriumcarbonat bzw. reines Natriumsulfat wiederholt, wobei 6 Gew.-% Hüllstoffe aufgesprüht wurden. Zum Vergleich wurde unter den gleichen Bedingungen auch auf ein nach dem Verfahren von DE 2 744 574 hergestelltes Kristallisat, das einen mittleren Teilchendurchmesser x₅₀ von 0,44 mm und einen Feinkornanteil von kleiner 0,2 mm von weniger als 2 Gew.-% aufwies, eine Hülle aus 90 Gewichtsteilen Natriumsulfat und 10 Gewichtsteilen Natriumcarbonat mit 6 Gew.-% Hüllstoffen aufgebracht. Mit dem so hergestellten umhüllten Natriumpercarbonat wurden durch Mischen von 80 Gewichtsteilen Basiswaschmittel IEC-A* BASE (wfk-Testgewebe GmbH, Krefeld), 15 Gewichtsteilen Natriumpercarbonat und 5 Gewichtsteilen TAED (Clariant) Waschmittelzubereitungen hergestellt.

Mit diesen Waschmittelzubereitungen wurden in einer Haushaltswaschmaschine Modell Miele Mondia 1120 bei 40 °C Waschtemperatur die in Tabelle 4 angeführten Testgewebe mit standardisierten Anschmutzungen zusammen mit 3,5 kg Baumwollgewebe ohne Vorwäsche gewaschen. Die Fleckentfernung aus den Testgeweben wurde durch Messung der Remission bei 457 nm in diffuser Reflektion am getrockneten Testgewebe mit einem Photometer Elrepho 450 der Firma Datacolor bestimmt. Es wurden jeweils 5 Waschversuche durchgeführt und die Mittelwerte und die kleinsten signifikanten Unterschiede (LSD, least significant differences) für die Remissionszunahme bestimmt. Die Ergebnisse der Waschversuche sind in Tabelle 5 zusammengestellt.

Die Ergebnisse aus Tabelle 5 zeigen für das erfindungsgemäße Natriumpercarbonat im Vergleich zu einem nur mit Natriumsulfat umhüllten Natriumpercarbonat eine signifikant bessere Waschkraft bei 7 der 11 getesteten Anschmutzungen. Im Vergleich zu einem mit der gleichen Hüllschicht umhüllten Kristallisat wurde bei 9 von 11 getesteten Anschmutzungen eine signifikant bessere Waschkraft gefunden.

**Tabelle 4**

| Testgewebe für die Waschversuche | |
|---|---|
| Anschmutzung | Herstellerbezeichnung |
| Rotwein | Empa 114 |
| Tee | CFT C-BC-01 |
| Kaffee | wfk 10 K |
| Johannisbeersaft schwarz | wfk 10 JB |
| Curry | wfk 10 U |
| Blut/Milch/Tusche | Empa 116 |
| Blut gealtert | CFT C-S-01 |
| Milch/Kakao gealtert | wfk 10 MF |
| Ruß/Olivenöl | Empa 101 |
| Pigment/Wollfett | wfk 10 C |
| Pigment/Hautfett | wfk 20 D |

| | |
|---|---|
| Empa = Eidgenössische Materialprüfungs- und Forschungsanstalt, St. Gallen / CH wfk = wfk-Testgewebe GmbH, Krefeld / D CFT = Center for Testmaterials, Vlaardingen / NL | |

**Tabelle 5**

| Remissionszunahme im Waschversuch | | | | |
|---|---|---|---|---|
| Anschmutzung | Remissionszunahme [%] | | | |
| | WS-Granulat Hüllschicht Na₂SO₄ 100 Teile* | WS-Granulat Hüllschicht Na₂SO₄/Na₂CO₃ 90:10 Teile | Kristallisat Hüllschicht Na₂SO₄/Na₂CO₃ 90:10 Teile* | LSD |
| Rotwein | 22,9 | 23,7 | 21,2 | 1,0 |
| Tee | 10,4 | 10,7 | 10,1 | 0,3 |
| Kaffee | 41,6 | 42, 1 | 39,4 | 0,3 |
| Johannisbeersaft schwarz | 49,1 | 49,6 | 46,5 | 0,4 |
| Curry | 28,0 | 29,0 | 29,5 | 0,6 |
| Blut/Milch/ Tusche | 31,6 | 32,1 | 30,1 | 1,6 |
| Blut gealtert | 28,3 | 31,0 | 26,7 | 1,7 |
| Milch/Kakao gealtert | 22,8 | 25,4 | 19,4 | 1,2 |
| Ruß/Olivenöl | 24,8 | 27,2 | 23,4 | 1,5 |
| Pigment/ Wollfett | 12,8 | 16,7 | 17,8 | 1,0 |
| Pigment/ Hautfett | 33,5 | 32,9 | 29,1 | 1,2 |

| | | | | |
|---|---|---|---|---|
| * Nicht erfindungsgemäß WS-Granulat = Wirbelschichtgranulat LSD = Kleinster signifikanter Unterschied | | | | |

## Patentansprüche

1. Umhüllte Natriumpercarbonatpartikel, umfassend einen durch Wirbelschichtaufbaugranulation erhältlichen Kern aus Natriumpercarbonat und eine Natriumsulfat und Natriumcarbonat enthaltende Hüllschicht,
**dadurch gekennzeichnet,**
**dass** die Hüllschicht Natriumsulfat und Natriumcarbonat in einem Gewichtsverhältnis von 95 : 5 bis 75 : 25 enthält und der Anteil von Natriumsulfat und Natriumcarbonat an der Hüllschicht mindestens 80 Gew.-% beträgt.

2. Umhüllte Natriumpercarbonatpartikel nach Anspruch 1,
**dadurch gekennzeichnet,**
**dass** das in der Hüllschicht enthaltene Natriumcarbonat zu mehr als 80% in Form von Burkeit der Zusammensetzung Na₄(SO₄)₁₊ₙ(CO₃)₁₋ₙ mit n von 0 bis 0,5 vorliegt.

3. Umhüllte Natriumpercarbonatpartikel nach Anspruch 1 oder 2,
**dadurch gekennzeichnet,**
**dass** die Natriumsulfat und Natriumcarbonat enthaltende Hüllschicht zusätzlich 0,1 bis 1 Gew.-% Natriumsilikat enthält.

4. Umhüllte Natriumpercarbonatpartikel nach einem der vorangehenden Ansprüche,
**dadurch gekennzeichnet,**
**dass** die Natriumsulfat und Natriumcarbonat enthaltende Hüllschicht unmittelbar auf dem Kern aus Natriumpercarbonat aufliegt.

5. Umhüllte Natriumpercarbonatpartikel nach einem der vorangehenden Ansprüche,
**dadurch gekennzeichnet,**
**dass** der Gewichtsanteil der Hüllschicht 2 bis 10 % bezogen auf die Masse des Natriumpercarbonatpartikels beträgt.

6. Umhüllte Natriumpercarbonatpartikel nach einem der vorangehenden Ansprüche,
**dadurch gekennzeichnet,**
**dass** die Hüllschicht durch Aufsprühen einer Natriumsulfat und Natriumcarbonat enthaltenden wässrigen Lösung mit einem Gesamtgehalt an Salzen von weniger als 25 Gew.-% in einer Wirbelschicht und gleichzeitiges Verdampfen von Wasser erhältlich ist.

7. Umhüllte Natriumpercarbonatpartikel nach einem der vorangehenden Ansprüche,
**dadurch gekennzeichnet,**
**dass** der massenbezogene Median der Partikelgröße im Bereich von 0,2 bis 5 mm liegt und weniger als 10 Gew.-% der Partikel kleiner als 0,2 mm sind.

8. Waschmittel,
enthaltend Natriumpercarbonatpartikel nach einem der Ansprüche 1 bis 7.

9. Reinigungsmittel,
enthaltend Natriumpercarbonatpartikel nach einem der Ansprüche 1 bis 7.

## Claims

1. Coated sodium percarbonate particles, comprising a core of sodium percarbonate obtainable by fluidized bed buildup granulation, and a coating layer comprising sodium sulfate and sodium carbonate,
**characterized in that**
the coating layer comprises sodium sulfate and sodium carbonate in a weight ratio of from 95 : 5 to 75 : 25 and the proportion of sodium sulfate and sodium carbonate in the coating layer is at least 80% by weight.

2. Coated sodium percarbonate particles according to Claim 1,
**characterized in that**
the sodium carbonate present in the coating layer is present to an extent of more than 80% in the form of burkeite of composition Na₄(SO₄)₁₊ₙ(CO₃)₁₋ₙ where n is from 0 to 0.5.

3. Coated sodium percarbonate particles as claimed in Claim 1 or 2,
**characterized in that**
the coating layer comprising sodium sulfate and sodium carbonate additionally comprises from 0.1 to 1% by weight of sodium silicate.

4. Coated sodium percarbonate particles as claimed in any one of the preceding claims,
**characterized in that**
the coating layer comprising sodium sulfate and sodium carbonate immediately adjoins the core of sodium percarbonate.

5. Coated sodium percarbonate particles as claimed in any one of the preceding claims,
**characterized in that**
the proportion by weight of the coating layer is from 2 to 10% based on the mass of the sodium percarbonate particle.

6. Coated sodium percarbonate particles as claimed in any one of the preceding claims,
**characterized in that**
the coating layer is obtainable by spraying on an aqueous solution comprising sodium sulfate and sodium carbonate with a total content of salts of less than 25% by weight in a fluidized bed and simultaneous evaporation of water.

7. Coated sodium percarbonate particles as claimed in any one of the preceding claims,
**characterized in that**
the mass-based median particle size is in the range from 0.2 to 5 mm and less than 10% by weight of the particles are smaller than 0.2 mm.

8. Detergent
comprising sodium percarbonate particles as claimed in any one of Claims 1 to 7.

9. Cleaning composition
comprising sodium percarbonate particles as claimed in any one of Claims 1 to 7.

## Revendications

1. Particules de percarbonate de sodium enrobées, comprenant un noyau, pouvant être obtenu par granulation d'élaboration en lit fluidisé, en percarbonate de sodium et une couche d'enrobage en sulfate de sodium et en carbonate de sodium, **caractérisées en ce que** la couche d'enrobage contient du sulfate de sodium et du carbonate de sodium dans un rapport pondéral de 95:5 à 75:25 et la proportion de sulfate de sodium et de carbonate de sodium par rapport à la couche d'enrobage est d'au moins 80% en poids.

2. Particules de percarbonate de sodium enrobées selon la revendication 1, **caractérisées en ce que** le carbonate de sodium contenu dans la couche d'enrobage se trouve à raison de plus de 80% sous forme de Burkéite de composition Na₄(SO₄)₁₊ₙ(CO₃)₁₋ₙ avec n de 0 à 0,5.

3. Particules de percarbonate de sodium enrobées selon la revendication 1 ou 2, **caractérisées en ce que** la couche d'enrobage contenant le sulfate de sodium et le carbonate de sodium contient en outre 0,1 à 1% en poids de silicate de sodium.

4. Particules de percarbonate de sodium enrobées selon l'une quelconque des revendications précédentes, **caractérisées en ce que** la couche d'enrobage contenant du sulfate de sodium et du carbonate de sodium se trouve directement sur le noyau en percarbonate de sodium.

5. Particules de percarbonate de sodium enrobées selon l'une quelconque des revendications précédentes, **caractérisées en ce que** la proportion pondérale de la couche d'enrobage est de 2 à 10% par rapport à la masse de la particule de percarbonate de sodium.

6. Particules de percarbonate de sodium enrobées selon l'une quelconque des revendications précédentes, **caractérisées en ce que** la couche d'enrobage peut être obtenue par pulvérisation d'une solution aqueuse contenant du sulfate de sodium et du carbonate de sodium avec une teneur totale en sels inférieure à 25% en poids dans un lit fluidisé et évaporation simultanée de l'eau.

7. Particules de percarbonate de sodium enrobées selon l'une quelconque des revendications précédentes, **caractérisées en ce que** la taille médiane de particules par rapport à la masse se situent dans la plage de 0,2 à 5 mm et que moins de 10% en poids des particules sont inférieures à 0,2 mm.

8. Agent de lavage contenant des particules de percarbonate de sodium selon l'une quelconque des revendications 1 à 7.

9. Agent de nettoyage, contenant des particules de percarbonate de sodium selon l'une quelconque des revendications 1 à 7.
